Europäisches Patentamt

European Patent Office

Office européen des brevets

(19)

(11) Veröffentlichungsnummer: **0 300 150 B1**

(12) **EUROPÄISCHE PATENTSCHRIFT**

(45) Veröffentlichungstag der Patentschrift: **08.09.93**

(51) Int. Cl.5: **B22D 11/16**, G01F 23/26

(21) Anmeldenummer: **88107300.1**

(22) Anmeldetag: **06.05.88**

(54) **Vorrichtung zum Detektieren von in einem Fluss einer Metallschmelze mitfliessener Schlacke.**

(30) Priorität: **10.07.87 DE 3722795**

(43) Veröffentlichungstag der Anmeldung:
**25.01.89 Patentblatt 89/04**

(45) Bekanntmachung des Hinweises auf die
Patenterteilung:
**08.09.93 Patentblatt 93/36**

(84) Benannte Vertragsstaaten:
**AT BE CH DE ES FR GB IT LI LU NL SE**

(56) Entgegenhaltungen:
**WO-A-86/02583**
**FR-A- 2 352 288**
**GB-A- 2 004 655**
**US-A- 3 366 873**
**US-A- 3 942 105**

**STEEL TIMES, Band 213, Nr. 5, Mai 1985,**
**Seiten 240,241, Redhill, Surrey, GB; "Eddy**
**current molten steel level meter with a small**
**detecting head"**

**Idem**

(73) Patentinhaber: **AMEPA ANGEWANDTE MESS-
TECHNIK UND PROZESSAUTOMATISIERUNG
GMBH
Jülicher Strasse 336
D-52070 Aachen(DE)**

(72) Erfinder: **Julius, Edmund, Dr. Ing.
Soerser Weg 51
D-5100 Aachen(DE)**

(74) Vertreter: **Brückner, Raimund Dipl.-Ing.
Lessingstrasse 16-18
D-65189 Wiesbaden (DE)**

EP 0 300 150 B1

## Beschreibung

Die Erfindung betrifft eine Vorrichtung zum Detektieren von in einem Fluß einer Metallschmelze mitfließender Schlacke und besteht aus einem Meßaufnehmer, der mindestens eine Sende- und eine Empfangsspule aufweist, denen mindestens eine Referenzspule zugeordnet ist. Der Meßaufnehmer ist im Bereich einer Bodenplatte eines metallurgischen Gefäßes angeordnet. Die Bodenplatte ist mit einer Ausflußöffnung versehen, wozu der Meßaufnehmer so angeordnet ist, daß er den Flußquerschnitt der Metallschmelze berührungslos umschließt.

In der DE-OS 34 39 369 bekannten Vorrichtung ist der Meßaufnehmer in den Lochstein bzw. die Ausmauerung des metallurgischen Gefäßes eingebaut und erlaubt es sogar aufgrund einer hohen Signalamplitude sowie eines großen Signal-Störverhältnisses, sehr geringe Schlackenanteile in der abfließenden Schmelze zu erkennen und anzuzeigen, ohne dazu die Abschirmung des Gießstrahls entfernen zu müssen oder das Gießen zu behindern.

Ein Nachteil der bekannten Vorrichtung ergibt sich aus der Anordnung des Meßaufnehmers im Lochstein bzw. in der Gefäßausmauerung insbesondere dann, wenn diese häufig gewechselt werden müssen und der Meßaufnehmer infolgedessen nicht wieder verwendet werden kann, sondern durch einen neuen Meßaufnehmer zu ersetzen ist.

Ordnet man den Meßaufnehmer auf oder in der Bodenplatte des metallurgischen Gefäßes an, so werden die Signalamplituden durch die Metallabschirmung und durch den metallischen Boden des Gefäßes stark vermindert. Zudem verändern bei dieser Anordnung die Temperaturänderungen der ferromagnetischen Metallteile in der Nähe der Meßaufnehmer die Permeabilität dieser Teile. Dadurch werden starke Signaldriften erzeugt, die ein Mitlaufen von Schlacke im Gießstrahl vortäuschen können.

Aus der US-A- 3,942,105 ist eine Vorrichtung zur Bestimmung einer Grenzfläche Schlacke/Metall beim Stranggießen beschrieben. Sie weist elektromagnetische Spulen in einer antimagnetischen Umhüllung auf.

Der Erfindung liegt die Aufgabe zugrunde, die bekannte Vorrichtung so zu verbessern, daß sich der Meßaufnehmer durch eine lange Standzeit auszeichnet, die durch einen erforderlichen Wechsel des Lochsteines oder der Ausmauerung in keiner Weise beeinträchtigt wird, und ferner, daß sich eine für die Messung problematische Signaldrift aufgrund von Temperaturänderungen der ferromagnetischen Bodenplatte des metallurgischen Gefäßes erheblich vermindern läßt.

Zur Lösung dieser Aufgabe wird von einer Vorrichtung der im Oberbegriff des Anspruchs 1 genannten gattungsgemäßen Art ausgegangen, die erfindungsgemäß die im kennzeichnenden Teil desselben angegebenen Merkmale aufweist.

Durch die erfindungsgemäße Unterbringung der Sende- und der Empfangsspule des Meßaufnehmers in einer antimagnetischen Kassette kann der Meßaufnehmer auf oder im Boden des metallurgischen Gefäßes angeordnet werden. Durch die Gestaltung der Kassette kann zusätzlich zu einem Schutz gegen mechanische Beanspruchungen des Meßaufnehmers auch erreicht werden, elektromagnetische Felder so zu verändern, daß Änderungen der Permeabilität der Bodenplatte das Meßsignal nur wenig beeinflussen.

Nach einer Ausgestaltung der Erfindung sind die Spulen in keramisches Material eingebettet, womit die Kassette ausgefüllt ist.

Durch das beispielsweise in Pulver- oder Faserform in die Kassette eingebrachte keramische Material lassen sich die Spulen sicher innerhalb des Kassettenhohlraumes positionieren, ohne jedoch die Spulen daran zu hindern, sich wiederholt auszudehnen und zu schrumpfen, was bei einer starren Fixierung der Spulen dazu führen würde, daß die Spulen beschädigt werden.

Obschon die der Sende- und der Empfangsspule zugeordnete Referenzspule außerhalb der Kassette angeordnet sein kann, läßt sich nach einer weiteren Ausgestaltung der Erfindung die Referenzspule innerhalb der Kassette unterbringen, wobei sie durch eine Zwischenwand von der Sende- und der Empfangsspule getrennt angeordnet und durch eine zusätzliche Wandauskleidung oder Wandverstärkung abgeschirmt wird.

Durch diese Ausgestaltung ergibt sich eine verbesserte Driftunterdrückung der erfindungsgemäßen Vorrichtung, da beide Spulen den gleichen Temperaturen unterworfen sind.

Je nach den Erfordernissen kann es sich empfehlen, auch die Sende- und die Empfangsspule gemäß einer weiteren Ausgestaltung der Erfindung durch eine gemeinsame zusätzliche Wandauskleidung oder Wandverstärkung abzuschirmen.

Durch die erfindungsgemäße Einkapselung der Spulen ergeben sich verschiedene Möglichkeiten für die Anordnung der Vorrichtung:

Eine besonders vorteilhafte Anordnung wird nach einer Ausgestaltung der Erfindung darin gesehen, daß die Kassette auf der Oberseite der Bodenplatte angeordnet und in die Unterseite eines Lochsteins eingelassen ist.

Nach einer anderen Anordnung der erfindungsgemäßen Vorrichtung ist die Kassette als konzentrischer Ring in die Ausflußöffnung der Bodenplatte eingelassen.

Diese Anordnung ergmöglicht es, die Kassette von der Unterseite des metallurgischen Gefäßes aus einzusetzen, wodurch sich erhebliche Montageerleichterungen ergeben.

Nach weiteren Ausgestaltungen der Erfindung kann die Kassette auch die Führung für eine Ausflußhülse bilden und/oder in einen Zentrierring für den Lochstein integriert sein.

In jedem Falle läßt sich die Kassette mit dem darin eingeschlossenen Meßaufnehmer unabhängig von einem Austausch des Lochsteines oder der Gefäßausmauerung erneut verwenden.

In der Zeichnung sind verschiedene Ausführungsbeispiele der erfindungsgemäßen Vorrichtung in jeweils einem vertikalen Schnitt schematisch dargestellt. Es zeigen:

Figur 1 die Vorrichtung in Verbindung mit einem Ausgußsystem eines metallurgischen Gefäßes;

Figur 2 die Vorrichtung gemäß Figur 1 auf einer Bodenoberseite in vergrößertem Maßstab;

Figur 3 die in eine Bodenplatte eingelassene Vorrichtung;

Figur 4 die Vorrichtung in der Anordnung gemäß Figur 2, jedoch mit einer außerhalb angeordneten Referenzspule;

Figur 5 die Vorrichtung in der Anordnung gemäß Figur 3, jedoch gleichfalls mit einer außerhalb angeordneten Referenzspule.

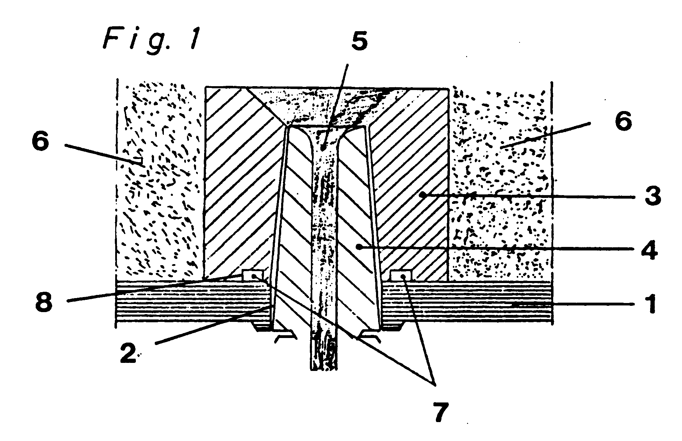

In Figur 1 ist eine Bodenplatte 1 eines weiter nicht dargestellten metallurgischen Gefäßes erkennbar, die mit einer Öffnung 2 versehen ist. Koaxial zur Öffnung 2 ist auf der Bodenplatte 1 ein Lochstein 3 angeordnet, in den eine Innehülse 4 eingesetzt ist. Durch die so definierte Ausflußöffnung wird Metallschmelze 5 aus dem mit einer feuerfesten Ausmauerung 6 versehenen metallurgischen Gefäß abgelassen.

Auf der Oberseite der Bodenplatte 1 ist eine ringförmige Kassette 7 so angeordnet, daß sie den Flußquerschnitt der Metallschmelze 5 berührungslos umschließt. Eingelassen in eine Ringnut 8 des Lochsteins 3, kann der Lochstein in seiner Position zentriert und fixiert werden.

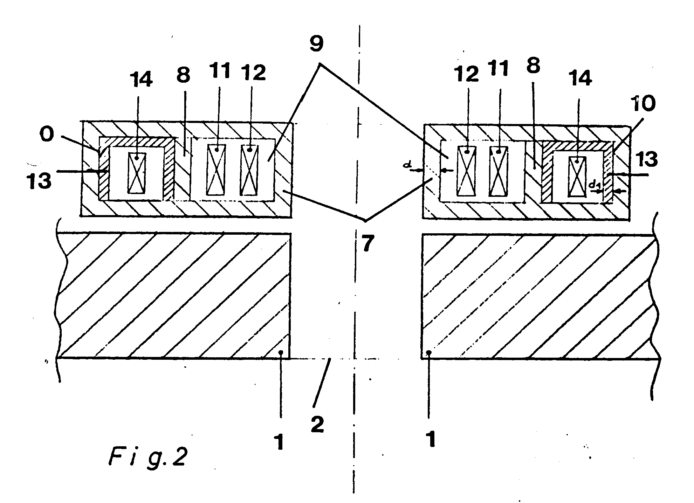

Wie Figur 2 zeigt, ist die auf der Bodenplatte 1 angeordnete Kassette 7 durch eine Wand 8 in zwei konzentrische Ringkammern 9 und 10 unterteilt. In der Ringkammer 9 ist eine Sendespule 11 und eine Empfangsspule 12 angeordnet. In der die Ringkammer 9 umschließenden Ringkammer 10, die innen mit einer zusätzlichen Wandauskleidung 13 versehen ist, befindet sich eine Referenzspule 14.

Die Wirkungsweise der Vorrichtung ist folgende:

In die Referenzspule 11 werden Wechselströme bestimmter Frequenz eingespeist. Diese induzieren in der Metallschmelze 5 und in der Bodenplatte 1 Wirbelströme, deren Felder sowohl in der Empfangsspule 12 als auch in der Referenzspule 14 Induktionsspannungen hervorrufen.

Durch die besondere geometrische Ausbildung der Kassette 7, insbesondere durch die zusätzliche Wandauskleidung 13, 15 mit einem elektrisch leitenden Material, werden die von der Metallschmelze 5 ausgehenden elektromagnetischen Felder von der Referenzspule 14 weitgehend ferngehalten, während durch die Symmetrie des Bodens der Kassette 7 die von der Bodenplatte 1 ausgehenden elektromagnetischen Felder auf beide Spulen 12 und 14 nahezu gleich einwirken. Durch eine phasenrichtige Differenzbildung der Induktionsspannungen aus Referenzspule 14 und Empfangsspule 12 können daher die durch die Permeabilitätsänderungen der Bodenplatte 1 hervorgerufenen Feldänderungen kompensiert werden.

Die Wandstärken der Kassette 7 werden vorzugsweise so gewählt, daß:

$$d << \delta \, ,$$

wobei

$$\delta = \sqrt{\frac{2}{\omega \cdot \varkappa \cdot \mu}}$$

und dabei

$\delta$ = Eindringtiefe

$\varkappa$ = elektrische Leitfähigkeit der Wand

$\mu$ = Permeabilität

$\omega$ = $2\pi f$ = Kreisfrequenz des Meßstromes.

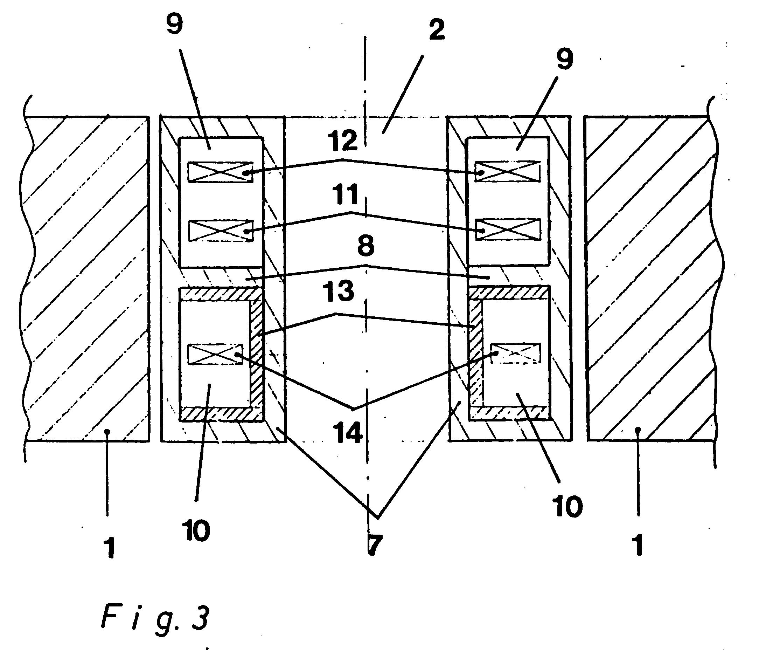

Im Unterschied zu den Figuren 1 und 2 liegt die Kassette 7 im Ausführungsbeispiel gemäß Figur 3 nicht auf der Bodenplatte 1 des Gefäßes, sondern befindet sich als konzentrischer Ring in der Öffnung 2 der Bodenplatte 1. Die Kassette 7 kann gleichzeitig die Führung einer Ausflußhülse übernehmen oder in einen schon bestehenden Zentrierring oder dgl. integriert werden.

Die Wirkungsweise ist bei dieser Anordnung identisch mit der oben beschriebenen Wirkungsweise, wobei jedoch die Wirbelströme seitlich in der Bodenplatte 1 induziert werden. Die Rückwirkung auf die Meßspule 12 und die Referenzspule 14 ist im Prinzip die gleiche wie bei der Anordnung gemäß Figur 2. Der Vorteil der Anordnung gemäß Figur 3 besteht darin, daß die Ausmauerung der Lochsteine des metallurgischen Gefäßes nicht verändert werden muß. Eine Änderung der metallischen Bodenplatte 1 entfällt, wenn die Ausflußhülse der Kassette 7 angepaßt wird, die gleichzeitig die Führung der Hülse übernehmen kann. Darüberhinaus kann die Kassette 7 von der Unterseite der Bodenplatte 1, also ohne Neuzustellung von außen, gewechselt werden.

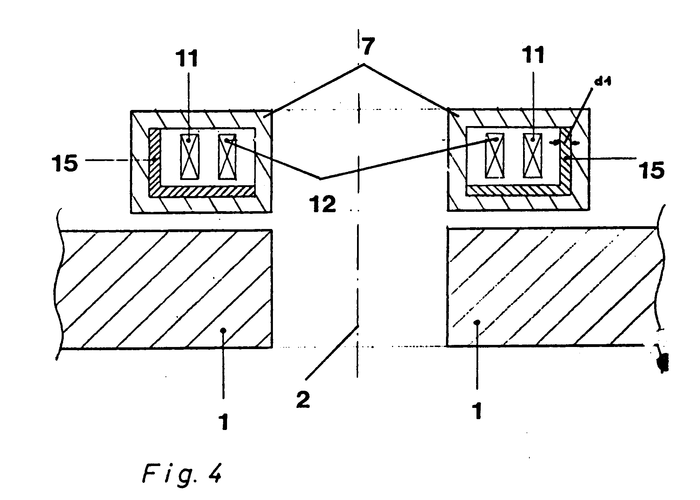

Bei der Ausbildung der Vorrichtung gemäß Figur 4 wird auf die Anordnung einer Referenzspule innerhalb der Kassette 7 verzichtet. Diese wird außerhalb der Kassette 7 angeordnet oder auf elektronischem Wege nachgebildet.

Die Wirkungsweise ist folgende:
Durch Einspeisung von zwei Frequenzen in die Sendespule 11 werden in der Metallschmelze 5 und der Bodenplatte 1 Wirbelströme unterschiedlicher Amplitude und Phasenlage induziert. Werden die Frequenzen und die Dicke d1 einer zusätzlichen Wandauskleidung 15 so gewählt, daß die Felder der höheren Frequenzen nur wenig, die der niedrigen aber deutlich in die Bodenplatte 1 eindringen können, so enthalten die Signale der niedrigen Frequenzen in erster Linie Informationen über die Temperaturänderung der Bodenplatte 1, während die höheren Frequenzen vorwiegend Informationen über die Metallschmelze 5 enthalten. Die Dicke der zusätzlichen Wandauskleidung 15 sollte sich daher ergeben aus:

$\delta 1 >> d1$ und $\delta 2 << d1$,

wobei

$$\delta 1,2 = \sqrt{\frac{2}{\omega_{1,2} \cdot x_{1,2} \cdot \mu}}$$

worin:

- $\omega_1$ = Frequenz der niedrigen Meßfrequenz
- $\omega_2$ = Frequenz der höheren Meßfrequenz
- $x_1$ = elektrische Leitfähigkeit der Wand d
- $x_2$ = elektrische Leitfähgikeit der zusätzlichen Wandauskleidung d1.

Die gleichzeitige Auswertung der Signale beider Frequenzen läßt dann eine weitgehende Trennung der Einflußgrößen "Schlackemitlaufen" und Temperaturdriften zu, insbesondere, wenn durch Abstimmung der Frequenzen und der Dicke d1 erreicht wird, daß die Phasenlage der Signale und der Störsignale sich um jeweils 90° unterschieden.

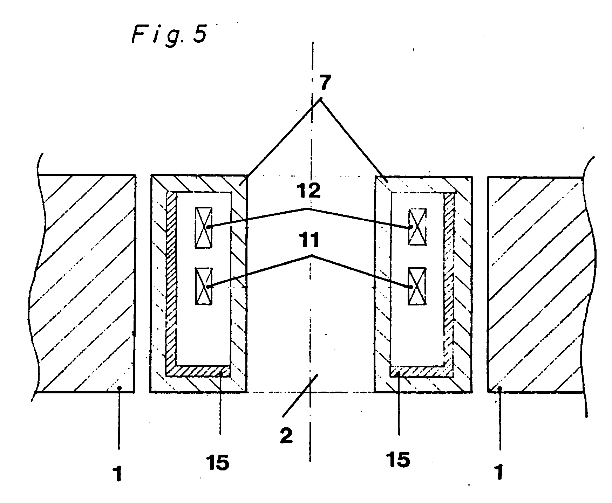

Im Unterschied zum Ausführungsbeispiel gemäß Figur 4 liegt die Kassette 7 im Ausführungsbeispiel gemäß Figur 5 nicht in der Bodenplatte 1 des Gefäßes, sondern - wie in Figur 3 - als konzentrischer Ring in der Öffnung 2 der Bodenplatte 1. Die Kassette 7 kann gleichzeitig die Führung einer Ausflußhülse übernehmen oder in einen schon bestehenden Zentrierring oder dgl. integriert werden.

Die Wirkungsweise dieser Anordnung ist wiederum identisch mit der Wirkungsweise der Anordnung gemäß Figur 4. Im Unterschied zu dieser Anordnung werden lediglich die Wirbelströme seitlich in die Bodenplatte 1 induziert.

Der Vorteil dieser Anordnung ist, daß die Lochsteine und die Ausmauerung des Gefäßes nicht geändert werden müssen. Eine Änderung der Bodenplatte 1 entfällt, wenn die Ausflußhülse der Kassette 7 angepaßt wird. Darüberhinaus kann die Kassette 7 von der Unterseite der Bodenplatte 1 aus unabhängig von einer Neuzustellung von außen gewechselt werden.

## Patentansprüche

1. Vorrichtung zum Detektieren von in einem Fluß einer Metallschmelze mitfließender Schlacke, bestehend aus einem im Bereich einer mit einer Ausflußöffnung (2) versehenen Bodenplatte (1) eines metallurgischen Gefäßes angeordneten, den Flußquerschnitt der Metallschmelze berührungslos umschließenden Meßaufnehmer, der mindestens eine Sende- (11) und eine Empfangsspule (12) aufweist, denen mindestens eine Referenzspule (14) zugeordnet ist,
dadurch gekennzeichnet,
daß mindestens die Sende- und die Empfangsspule (11 bzw. 12) in einer antimagnetischen Kassette (7) untergebracht sind, welche die Spulen mit einem elektromagnetische Felder verändernden und gegen mechanische Beanspruchungen beständigen Schutzmantel umgibt, daß die Referenzspule (14) durch eine Zwischenwand (8) von der Sende- und der Empfangsspule (11 bzw. 12) getrennt angeordnet ist und daß die Referenzspule (14) und/oder die Sende- und die Empfangsspule (11 bzw. 12) durch eine gemeinsame zusätzliche Wandauskleidung oder Wandverstärkung (13, 15) abgeschirmt sind, wobei diese Wandauskleidung (13, 15) aus elektrisch leitendem Material besteht.

2. Vorrichtung nach Anspruch 1,
dadurch gekennzeichnet,
daß die Spulen (11, 12, 14) in keramisches Material eingebettet sind, womit die Kassette (7) ausgefüllt ist.

3. Vorrichtung nach mindestens einem der Ansprüche 1 bis 2,
dadurch gekennzeichnet,
daß die Kassette (7) auf der Oberseite der Bodenplatte (1) angeordnet und in die Unterseite eines Lochsteins (3) eingelassen ist.

**4.** Vorrichtung nach mindestens einem der Ansprüche 1 bis 3,
dadurch gekennzeichnet,
daß die Kassette (7) als konzentrischer Ring in eine Öffnung (2) der Bodenplatte (1) eingelassen ist.

**5.** Vorrichtung nach mindestens einem der Ansprüche 1 bis 4,
dadurch gekennzeichnet,
daß die Kassette (7) die Führung einer Ausflußhülse (4) bildet.

**6.** Vorrichtung nach mindestens einem der Ansprüche 1 bis 5,
dadurch gekennzeichnet,
daß die Kassette (7) in einem Zentrierring für den Lochstein (3) integriert ist.

## Claims

**1.** Apparatus for detecting slag flowing in a stream of a metal melt comprising a measuring detector which is disposed in the vicinity of a base plate (1) provided with a discharge opening (2) of a metallurgical vessel and surrounds the flow cross-section of the metal melt in a non-contact manner and which has at least one transmitting coil (11) and a receiving coil (12), associated with which is a reference coil (14), characterised in that at least the transmitting and the receiving coils (11 and 12) are housed in an antimagnetic enclosure (7) which surrounds the coils with a protective wall which alters the electromagnetic fields and is resistant to mechanical loads, that the reference coil (14) is separated from the transmitting and the receiving coils (11 and 12) by a partition wall (8) and that the reference coil (14) and/or the transmitting and the receiving coils (11 and 12) are shielded by a common additional wall lining or wall reinforcement (13,15), this wall lining (13,15) comprising electrically conductive material.

**2.** Apparatus as claimed in claim 1, characterised in that the coils (11,12,14) are embedded in ceramic material, whereby the enclosure (7) is filled.

**3.** Apparatus as claimed in at least one of claims 1 to 2, characterised in that the enclosure (7) is disposed on the upper surface of the base plate (1) and is set into the underside of a nozzle brick (3).

**4.** Apparatus as claimed in at least one of claims 1 to 3, characterised in that the enclosure (7) is set into an opening (2) in the base plate (1) as a concentric ring.

**5.** Apparatus as claimed in at least one of claims 1 to 4, characterised in that the enclosure (7) forms the guide for a discharge sleeve (4).

**6.** Apparatus as claimed in at least one of claims 1 to 5, characterised in that the enclosure (7) is integrated into a centering ring for the nozzle brick (3).

## Revendications

**1.** Dispositif de détection de scories entraînées dans un flux de métal en fusion, composé d'un capteur de mesure qui est disposé dans la zone d'une sole (1), munie d'un orifice de coulée (2), d'une cuve métallurgique, qui entoure sans contact la section de flux du métal en fusion et qui présente au moins une bobine d'émission (11) et une bobine de réception (12) auxquelles est associée au moins une bobine de référence (14), caractérisé par le fait qu'au moins les bobines d'émission et de réception (11 et 12) sont logées dans un boîtier antimagnétique (7) qui entoure les bobines d'une enveloppe protectrice résistant aux efforts mécaniques et modifiant des champs électromagnétiques, que la bobine de référence (14) est séparée des bobines d'émission et de réception (11 et 12) par une paroi intermédiaire (8), et que la bobine de référence (14) et/ou les bobines d'émission et de réception (11 et 12) sont protégées par un revêtement de paroi ou un renforcement de paroi (13, 15) supplémentaire commun, ce revêtement de paroi (13, 15) étant constitué d'un matériau électriquement conducteur.

**2.** Dispositif selon la revendication 1, caractérisé par le fait que les bobines (11, 12, 14) sont noyées dans un matériau céramique remplissant le boîtier (7).

**3.** Dispositif selon au moins une des revendications 1 à 2, caractérisé par le fait que le boîtier (7) est disposé sur la face supérieure de la sole (1) et logé dans la face inférieure d'une pierre à trou (3).

**4.** Dispositif selon au moins une des revendications 1 à 3, caractérisé par le fait que le boîtier (7) est logé sous la forme d'une bague concentrique dans une ouverture (2) de la sole (1).

5. Dispositif selon au moins une des revendications 1 à 4, caractérisé par le fait que le boîtier (7) forme l'élément de guidage d'une busette de coulée (4).

6. Dispositif selon au moins une des revendications 1 à 5, caractérisé par le fait que le boîtier (7) est intégré dans une bague de centrage pour la pierre à trou (3).

Fig. 1

Fig.2

Fig. 3

EP 0 300 150 B1

*Fig. 4*

*Fig. 5*